# EUROPÄISCHE PATENTSCHRIFT

(11) **EP 0 760 429 B1**
(45) Veröffentlichungstag und Bekanntmachung des Hinweises auf die Patenterteilung: **14.10.1998**
(21) Anmeldenummer: 96111739.7
(22) Anmeldetag: 20.07.1996
(51) Int. Cl.: F16B 13/12

(54) **Spreizdübel aus Kunststoff**
Expansion dowel made of plastic
Cheville d'expansion en matière plastique

(30) Priorität: 04.08.1995 DE 19528687
(43) Veröffentlichungstag der Anmeldung: 05.03.1997
(73) Patentinhaber: Adolf Würth GmbH & Co. KG, 74653 Künzelsau (DE)
(72) Erfinder: Kerl, Gregor, 74676 Niedernhall (DE)
(74) Vertreter: Patentanwälte Ruff, Beier, Schöndorf und Mütschele

(56) Entgegenhaltungen:
- DE-A- 2 729 828
- US-A- 3 171 321
- US-A- 5 230 595

## Beschreibung

Die Erfindung geht aus von einem einstückig aus Kunststoff gespritzten Spreizdübel, der an seinem äußeren Ende eine Art Hülse aufweist, die dann einstückig in zwei Spreizschenkel übergeht, die durch einen Längsschlitz getrennt sind. Die Außenseite der Spreizdübel weist eine Außenprofilierung auf. In den Dübel wird ein Befestigungsmittel eingeschraubt oder eingeschlagen, in der Regel eine Schraube oder auch ein profilierter Nagel. Dieses Befestigungsmittel führt zum Aufspreizen der Längsschenkel.

Die an der Außenseite der Längsschenkel vorhandenen Vorsprünge und Vertiefungen bilden eine Verzahnung, mit denen sich die Längsschenkel in der Wand des Bohrloches verkrallen. Je größer die Vertiefungen zwischen den Vorsprüngen sind, desto besser ist die Verriegelung des Dübels in der Wand des Bohrloches.

Es hat sich jedoch herausgestellt, daß die Spreizschenkel an den Stellen der Vertiefungen eine Schwächung erfahren, die den Dübel insgesamt schwächt.

Es ist bereits ein Dübel dieser Art bekannt (CH-PS 383 598), bei dem in den Lücken zwischen den Zähnen der Spreizdübel jeweils Versteifungsrippen vorhanden sind. Diese weisen einen rechteckigen Querschnitt auf. Ihre radiale Außenfläche liegt radial weiter innen als die zylindrische Mantelfläche des Dübels.

Ebenfalls bekannt ist ein Spreizdübel (DE-PS 27 59 958), bei dem zur Verbesserung der Verdrehsicherung die Vorsprünge und Vertiefungen jedes Spreizschenkels eine bestimmte Form aufweisen, so daß abwechselnd nach rechts und nach links gerichtete Flächen entstehen.

Der Erfindung liegt die Aufgabe zugrunde, einen Dübel im Hinblick auf Haltbarkeit und Auszugswerte zu verbessern.

Zur Lösung dieser Aufgabe schlägt die Erfindung einen Spreizdübel mit den im Anspruch 1 aufgeführten Merkmalen vor. Weiterbildungen der Erfindung sind Gegenstand von weiteren Ansprüchen.

Das Vorsehen einer über die gesamte Länge der Außenprofilierung der Spreizschenkel durchgehenden Verstärkungsrippe führt dazu, daß die Spreizschenkel an sich deutlich verstärkt werden. Da in Umfangsrichtung die Verstärkungsrippe die Vertiefungen zwischen den Zähnen unterteilt, führt dies wiederum zu einer verbesserten Verteilung der Drücke beim Aufspreizen des Dübels im Dübelloch. Dies wiederum hat eine verbesserte Haltekraft zur Folge.

Gleichzeitig wirkt die Außenkante, die vorzugsweise über den Außenumfang des Dübels vorspringt, als Verdrehsicherung des Dübels. Diese Verdrehsicherung wirkt in beide Drehrichtungen. Aufgrund der großen Länge der Verstärkungsrippe verteilt sich die Verdrehsicherung über praktisch die gesamte Länge des Dübels, so daß auch hier eine verbesserte Verteilung der Kräfte auftritt. Dies gilt insbesondere dann, wenn, wie erfindungsgemäß ebenfalls vorgesehen sein kann, die Außenkante der Verstärkungsrippe durchgehend ausgebildet ist.

Erfindungsgemäß kann vorgesehen sein, daß die Verstärkungsrippen in einem Querschnitt durch den Dübel mittig an den Spreizschenkeln angeordnet sind, anders ausgedrückt, bei einem sich diametral erstreckenden Längsschlitz rechtwinklig zu dem Längsschlitz versetzt.

Die Erfindung schägt vor, der Verstärkungsrippe einen dreieckigen Querschnitt zu geben, wobei die Spitze des Dreiecks die Außenkante bildet. Dies führt beim Aufspreizen zu einem allmählichen progressiven Einschneiden der Verstärkungsrippe in die Wand des Dübellochs und damit zu einer allmählich zunehmenden Flächenpressung, was ebenfalls für die Verteilung der Klemmkräfte günstig ist.

Bei einer weiteren Ausführungsform weist der Spreizdübel in seiner Aufnahme Begrenzungsmittel zur Begrenzung einer rotationsfreien Axialbewegung des Befestigungsmittels auf. Bei dieser Ausführungsform, die auch unabhängig von der Verstärkungsrippe vorgesehen sein kann, kommen Befestigungsmittel zur Anwendung, die in der Regel Schraubgewinde oder gewindeähnliche Oberflächenstrukturen aufweisen. Mindestens ein Begrenzungsmittel ist vorzugsweise aus der Dübellängsachse so weit versetzt angeordnet, daß es bei eingeführtem Befestigungsmittel in einen Gewindegang des Befestigungsmittels eingreift. Das Befestigungsmittel befindet sich insbesondere an einem solchen Abschnitt des Dübels, in den das Befestigungsmittel noch ohne Spreizung des Dübels eingeführt werden kann. Dadurch ist es möglich, den Dübel zusammen mit dem teilweise eingeführten Befestigungsmittel durch Beaufschlagen des Befestigungsmittels in ein entsprechend vorgeformtes Loch einzutreiben, ohne daß der Dübel dabei gespreizt wird. Die Begrenzungsmittel dienen gleichzeitig als Verliersicherung für die Befestigungsmittel.

Es sind vorzugsweise mindestens zwei, insbesondere zwei Begrenzungsmittel vorgesehen, die sich in Bezug auf die Längsachse des Dübels gegenüberliegen und um das Einfache oder ein ungeradzahlig Vielfaches eines halben Gewindeganges des Befestigungsmittels axial gegeneinander versetzt angeordnet sind. Die Begrenzungsmittel sind vorzugsweise von mindestens einem Steg gebildet. Dieser ist mit Vorteil geradlinig ausgebildet. Eine stabförmige, insbesondere im wesentlichen zylindrische Ausbildung ist bevorzugt. Das mindestens eine Begrenzungsmittel, insbesondere der mindestens eine Steg, verläuft bei einer bevorzugten Ausführungsform in einer zur Dübelachse senkrechten Querschnittsebene. Es ist nicht erforderlich, daß der Verlauf des Begrenzungsmittels der Schräge des Gewindeganges angepaßt ist. Ein tangentiales Eingreifen in das Gewinde reicht völlig aus. Das mindestens eine Begrenzungsmittel bzw. der mindestens eine Steg ist vorzugsweise im Bereich der Spreizschenkel, insbesondere im Bereich des sich an die Dübelhülse anschließenden ersten Drittels der Länge der Spreizschenkel angeordnet. In diesem Bereich ist die Aufnahme des Spreizdübels, die vorzugsweise nach Art eines Steilkegels ausgebildet ist, schon relativ schmal. Mit besonderem Vorteil übergreift das mindestens eine Befestigungsmittel, insbesondere der mindestens eine Steg, den Längsschlitz des Spreizdübels und verbindet die beiden Spreizschenkel miteinander. Dadurch wird eine zusätzliche Verbindung der beiden Spreizschenkel geschaffen, die ein Aufweiten des Spreizdübels beim Einschlagen in ein Loch verhindert. Vorzugsweise sind die die Spreizschenkel miteinander verbindenden Begrenzungsmittel so dimensioniert, daß sie beim weiteren Eintreiben der Befestigungsmittel abreißen und die ungehinderte Spreizung des Spreizdübels ermöglichen.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine Seitenansicht eines von der Erfindung vorgeschlagenen Dübels;
- Fig. 2: eine der Fig. 1 entsprechende Seitenansicht aus einer um 90° verdrehten Richtung;
- Fig. 3: vergrößert einen Querschnitt durch den Spreizdübel längs Linie II-II in Fig. 1.

Der in den Figuren dargestellte Spreizdübel, der einstückig aus Kunststoff gespritzt ist, enthält in seinem äußeren Bereich zunächst ein Hülsenelement 1, das hohl ausgebildet ist und zum Einstecken eines Befestigungsmittels gedacht ist. Als Befestigungsmittel dient beispielsweise eine Schraube, oder auch ein profilierter Nagel.

Die Dübelhülse 1 geht in zwei Spreizschenkel 2 über, die durch einen Längsschlitz 3 voneinander getrennt sind. Der Längsschlitz geht im dargestellten Beispiel von dem in das Innere des Bohrloches gerichteten Ende des Dübels aus und erstreckt sich über einen großen Teil der Länge des Dübels.

Beide Spreizschenkel 2 enthalten an ihrer Außenseite eine Außenprofilierung, die von Vorsprüngen 4 und zwischen diesen liegenden Vertiefungen 5 gebildet wird. Die Vorsprünge 4 weisen eine Außenfläche auf, die in der zylindrischen Mantelfläche des Dübels liegt, also den gleichen Durchmesser aufweist wie das Hülsenelement 1.

Etwa in der Mitte der Längserstreckung des Dübels sind zwei einander gegenüberliegende seitliche Flügel 6 gebildet, die unter einem Winkel von etwa 30° gegenüber der Längsachse geneigt sind. Sie können beim Einschieben des Dübels in das Dübelloch nachgeben und sich in Ausnehmungen 7 einlegen. Die Flügel 6 dienen der Verdrehsicherung.

Über die Längserstreckung der Spreizschenkel 2 erstreckt sich eine Verstärkungsrippe 8, die in den Vertiefungen 5 zwischen den Vorsprüngen 4 deutlich ausgebildet ist und diese Vertiefungen in Umfangsrichtung in zwei getrennte Räume aufteilt. Die Verstärkungsrippe 8 weist eine Außenkante 9 auf, die über den zylindrischen Außenumfang 10 des Dübels radial vorspringt. Dadurch entsteht eine Verstärkungsrippe, die sich ununterteilt über die gesamte Länge der Spreizschenkel 2 erstreckt.

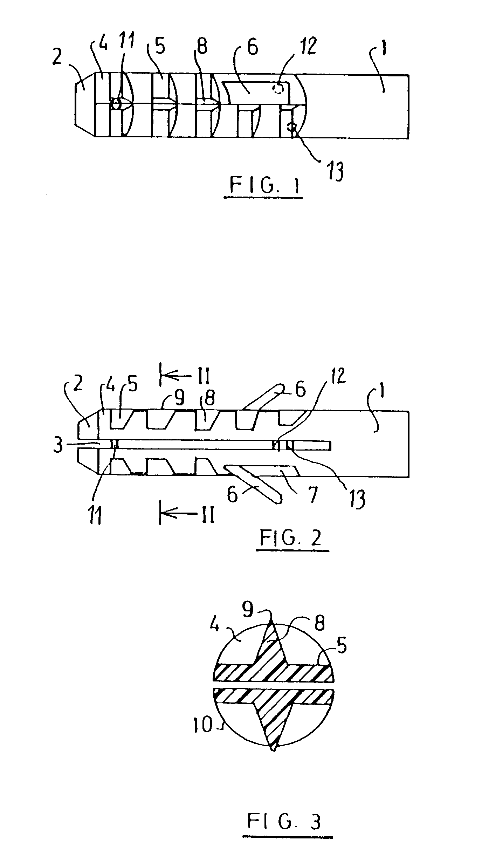

Fig. 3 zeigt einen Querschnitt durch den Dübel längs Linie II-II in Fig. 1. Die Verstärkungsrippe 8 weist einen dreieckigen Querschnitt auf, ist symmetrisch ausgebildet und symmetrisch angeordnet. Sie ist in diesem Querschnitt mittig an den beiden Spreizschenkeln 2 angeordnet. Die scharfkantige Außenkante 9 steht über die zylindrische Außenfläche der Vorsprünge 4 vor. Diese Außenkante 9 geht praktisch über die gesamte Länge der Spreizschenkel durch, d.h. mindestens in dem Bereich, wo sie wirksam sein kann. Im Bereich der Flügel 6 kann sie wegen des Vorhandenseins dieser Flügel nicht wirksam sein, so daß sie dort nicht ausgebildet zu sein braucht.

Durch den von der Erfindung vorgeschlagenen Dübel wird also nicht nur eine über die gesamte Länge der Spreizschenkel wirksame Drehsicherung erreicht, sondern auch eine Verstärkung der Spreizschenkel und eine verbesserte Verteilung der beim Aufspreizen auf das Mauerwerk ausgeübten Kraft.

Wie aus Fig. 2 ersichtlich, weist der Spreizdübel drei Stege 11, 12 und 13 auf, die die beiden Spreizschenkel 2 des Spreizdübels über den Längsschlitz 3 hinweg miteinander verbinden. Der im Bereich des Einsteckendes des Spreizdübels vorgesehene Steg 11 geht durch die Längsachse des Dübels und verhindert eine ungewollte Aufspreizung der Spreizschenkel 2, z.B. bei thermischer Belastung. Demgegenüber haben die Stege 11 und 12 eine zusätzliche und andere Aufgabe. Sie sind an der Innenwandung der spitzkegelförmig verlaufenden Aufnahme des Spreizdübels angeordnet und verlaufen senkrecht zur Längsachse des Dübels. Sie sind beide um eine halbe Ganghöhe einer als Befestigungsmittel dienenden Schraube in axialer Richtung gegeneinander versetzt. Ihr Abstand in Durchmesserrichtung entspricht im wesentlichen dem Kerndurchmesser des vorderen Teils einer Schraube, so daß die Schraube um wenige Gewindegänge zwischen die Stege 12 und 13 eingeschraubt werden kann. Durch das Eindrehen des Befestigungsmittels zwischen die Stege 12 und 13 wird das Befestigungsmittel in axialer Richtung relativ zum Spreizdübel festgelegt, so daß der Spreizdübel durch Beaufschlagen des Befestigungsmittels, z.B. einer Schraube, in eine Bohrung eingetrieben werden kann, ohne daß eine Spreizung des Dübels erfolgt. Dadurch, daß die Stege 12 und 13 den Schlitz 3 zwischen den beiden Spreizschenkeln 2 übergreifen und die Spreizschenkel miteinander verbinden, werden die Spreizschenkel beim Eintreiben des Dübels aneinandergehalten, so daß auch die spitzkegelförmige Wandung der Aufnahme des Spreizdübels axiale Kräfte aufzunehmen vermag, ohne daß eine Spreizung des Dübels erfolgt. Beim weiteren Eindrehen des Befestigungsmittels verläßt das Befestigungsmittel den spitzkegelförmigen Aufnahmebereich des Spreizdübels, so daß eine zwangsweise Spreizung der Spreizschenkel erfolgt. Dabei reißen die Stege 12 und 13 ab, so daß die Spreizung ungehindert vorgenommen werden kann.

## Patentansprüche

1. Spreizdübel aus Kunststoff, mit
1.1 einer Dübelhülse (1) mit einer Aufnahme für ein Befestigungsmittel,
1.2 zwei Spreizschenkeln (2), die
1.2.1 sich einstückig an die Dübelhülse (1) anschließen,
1.2.2 durch einen Längsschlitz (3) voneinander getrennt sind und
1.2.3 eine Außenprofilierung aufweisen, die
1.2.3.1 in Längsrichtung der Spreizschenkel (2) aufeinander folgende Vorsprünge (4) und Vertiefungen (5) enthält, sowie mit
1.3 auf jedem Spreizschenkel (2) je einer Verstärkungsrippe (8), die
1.3.1 in Längsrichtung der Spreizschenkel (2) verläuft und
1.3.2 in allen Vertiefungen (5) ausgebildet ist, dadurch gekennzeichnet, daß die Verstärkungsrippe (8) über die Länge der Spreizschenkel durchgehend ausgebildet ist.

2. Spreizdübel nach Anspruch 1, dadurch gekennzeichnet, daß die Verstärkungsrippe eine über die radiale Außenfläche der Vorsprünge (4) radial hinausragende Außenkante (9) aufweist.

3. Spreizdübel nach Anspruch 1 oder 2, bei dem die Außenkante (9) der Verstärkungsrippe (8) durchgehend ausgebildet ist.

4. Spreizdübel nach einem der vorhergehenden Ansprüche, bei dem die Verstärkungsrippen (8) mittig an den Spreizschenkeln (2) angeordnet sind.

5. Spreizdübel nach einem der vorhergehenden Ansprüche, bei dem die Verstärkungsrippen (8) symmetrisch ausgebildet sind.

6. Spreizdübel nach einem der vorhergehenden Ansprüche, bei dem die Verstärkungsrippen (8) einen dreieckigen Querschnitt aufweisen.

7. Spreizdübel nach einem der vorhergehenden Ansprüche, dadurch gekennzeichnet, daß er in seiner Aufnahme mindestens ein Begrenzungsmittel (12, 13) zur Begrenzung einer rotationsfreien Axialbewegung des Befestigungsmittels aufweist.

8. Spreizdübel nach Anspruch 7, dadurch gekennzeichnet, daß das mindestns eine Begrenzungsmittel so weit aus der Dübelachse seitlich versetzt angeordnet ist, daß es bei eingeführtem Befestigungsmittel in einen Gewindegang des Befestigungsmittels eingreift.

9. Spreizdübel nach Anspruch 7 oder 8, dadurch gekennzeichnet, daß mindestens zwei, vorzugsweise zwei Begrenzungsmittel (12, 13) vorgesehen sind, die sich in Bezug auf die Längsachse des Dübels gegenüberliegen und um das Einfache oder ein ungeradzahlig Vielfaches eines halben Gewindeganges des Befestigungsmittels axial gegeneinander versetzt angeordnet sind.

10. Spreizdübel nach einem der Ansprüche 7 bis 9, dadurch gekennzeichnet, daß das mindestens eine Begrenzungsmittel von mindestens einem Steg (12, 13) gebildet sind.

11. Spreizdübel nach einem der Ansprüche 7 bis 10, dadurch gekennzeichnet, daß das mindestens eine Begrenzungsmittel (12, 13), insbesondere der Steg geradlinig, vorzugsweise stabförmig ausgebildet ist.

12. Spreizdübel nach einem der Ansprüche 7 bis 11, dadurch gekennzeichnet, daß das mindestens eine Begrenzungsmittel (12, 13), vorzugsweise der Steg, in einer zur Dübelachse senkrechten Querschnittsebene verläuft.

13. Spreizdübel nach einem der Ansprüche 7 bis 12, dadurch gekennzeichnet, daß das mindestens eine Begrenzungsmittel (12, 13), vorzugsweise der Steg, im Bereich der Spreizschenkel (2), insbesondere im Bereich des sich an die Dübelhülse (1) anschließenden ersten Drittels der Länge der Spreizschenkel (2) angeordnet ist.

14. Spreizdübel nach einem der Ansprüche 7 bis 13, dadurch gekennzeichnet, daß das mindestens eine Begrenzungsmittel (12, 13), insbesondere der Steg den Längsschlitz (3) zwischen den Spreizschenkeln (2) übergreift und die beiden Spreizschenkel miteinander verbindet.

15. Spreizdübel nach einem der Ansprüche 10 bis 14, dadurch gekennzeichnet, daß das mindestens eine Begrenzungsmittel, insbesondere der Steg (12, 13), bei der Dübelspreizung abreißbar ausgebildet ist.

## Claims

1. Plastic expansion dowel, having
1.1 a dowel sleeve (1) with a receptacle for a fixing means,
1.2 two expansion legs (2), which
1.2.1 are connected in one piece to the dowel sleeve (1),
1.2.2 are separated from one another by an elongated slot (3) and
1.2.3 have an outer profiling, which
1.2.3.1 contains in the longitudinal direction of the expansion legs (2) succeeding projections (4) and depressions (5), as well as with
1.3 on each expansion leg (2) in each case one reinforcing rib (8), which
1.3.1 runs in the longitudinal direction of the expansion legs (2) and
1.3.2 is constructed in all the depressions (5), characterized in that the reinforcing rib (8) is constructed in continuous manner over the expansion leg length.

2. Expansion dowel according to claim 1, characterized in that the reinforcing rib has an outer edge (9) projecting radially over the radial outer face of the projections (4).

3. Expansion dowel according to claim 1 or 2, wherein the outer edge (9) of the reinforcing rib (8) is constructed in continuous manner.

4. Expansion dowel according to one of the preceding claims, wherein the reinforcing ribs (8) are arranged centrally on the expansion legs (2).

5. Expansion dowel according to one of the preceding claims, wherein the reinforcing ribs (8) are constructed symmetrically.

6. Expansion dowel according to one of the preceding claims, wherein the reinforcing ribs (8) have a triangular cross-section.

7. Expansion dowel according to one of the preceding claims, characterized in that it has in its receptacle at least one limiting means (12, 13) for limiting a rotation-free axial movement of the fixing means.

8. Expansion dowel according to claim 7, characterized in that at least one limiting means is arranged laterally displaced out of the dowel axis to such an extent that, when the fixing means are inserted, it engages in a thread of said fixing means.

9. Expansion dowel according to claim 7 or 8, characterized in that at least two, preferably two limiting means (12, 13) are provided, which face one another with respect to the longitudinal axis of the dowel and are axially mutually displaced by one or an odd-numbered multiple of half a thread of the fixing means.

10. Expansion dowel according to one of the claims 7 to 9, characterized in that the at least one limiting means is formed by at least one stud (12, 13).

11. Expansion dowel according to one of the claims 7 to 10, characterized in that the at least one limiting means (12, 13) and in particular the stud, has a linear, preferably rod-like construction.

12. Expansion dowel according to one of the claims 7 to 11, characterized in that the at least one limiting means (12, 13), preferably the stud, is in a cross-sectional plane perpendicular to the dowel axis.

13. Expansion dowel according to one of the claims 7 to 12, characterized in that the at least one limiting means (12, 13), preferably the stud, is positioned in the vicinity of the expansion legs (2), particularly in the vicinity of the first third of the length of the expansion legs (2) connected to the dowel sleeve (1).

14. Expansion dowel according to one of the claims 7 to 13, characterized in that the at least one limiting means (12, 13), particularly the stud, engages over the elongated slot (3) between the expansion legs (2) and interconnects the latter.

15. Expansion dowel according to one of the claims 10 to 14, characterized in that the at least one limiting means, particularly the stud (12, 13), is constructed so as to tear off during dowel expansion.

## Revendications

1. Cheville d'expansion en matière plastique, comprenant
1.1 une douille de cheville (1) avec un logement pour un moyen de fixation,
1.2 deux branches d'expansion (2) qui
1.2.1 sont d'une seule pièce dans le prolongement de la douille de cheville (1),
1.2.2 sont séparées l'une de l'autre par une fente longitudinale (3) et
1.2.3 qui présentent un profilage externe, qui
1.2.3.1 comporte des cavités (5) et des saillies (4) se suivant les unes derrière les autres dans le sens longitudinal des branches d'expansion (2), comprenant également
1.3 sur chaque branche d'expansion (2), une nervure de renfort (8), qui
1.3.1 s'étend dans le sens longitudinal des branches d'expansion (2) et
1.3.2 qui est ménagée dans toutes les cavités (5), caractérisée en ce que la nervure de renfort (8) est ménagée en continu sur la longueur des branches d'expansion.

2. Cheville d'expansion selon la revendication 1, caractérisée en ce que la nervure de renfort présente un bord externe (9) faisant saille radialement au-dessus de la surface externe radiale des saillies (4).

3. Cheville d'expansion selon la revendication 1 ou 2, où le bord externe (9) de la nervure de renfort (8) est continu.

4. Cheville d'expansion selon l'une des revendications précédentes, où les nervures de renfort (8) sont disposées au milieu sur les branches d'expansion (2).

5. Cheville d'expansion selon l'une des revendications précédentes, où les nervures de renfort (8) sont symétriques.

6. Cheville d'expansion selon l'une des revendications précédentes, où les nervures de renfort (8) présentent une section transversale triangulaire.

7. Cheville d'expansion selon l'une des revendications précédentes, caractérisé en ce qu'elle présente dans son logement au moins un moyen de délimitation (12, 13) pour la délimitation d'un mouvement axial sans rotation du moyen de fixation.

8. Cheville d'expansion selon la revendication 7, caractérisée en ce qu'au moins un moyen de fixation est disposée en décalé sur le côté suffisamment loin de l'axe de cheville pour qu'il s'engage dans un pas de vis du moyen de fixation lors de l'introduction du moyen de fixation.

9. Cheville d'expansion selon la revendication 7 ou 8, caractérisée en ce qu'il est prévu de préférence au moins deux moyens de délimitation (12, 13) qui sont opposés par rapport à l'axe longitudinal de la cheville et sont disposés axialement en décalé l'un par rapport à l'autre de l'équivalent d'une fois ou d'un multiple impair d'un demi-pas de vis du moyen de fixation.

10. Cheville d'expansion selon l'une des revendications 7 à 9, caractérisée en ce qu'au moins un moyen de délimitation est formé par au moins une arête (12, 13).

11. Cheville d'expansion selon l'une des revendications 7 à 10, caractérisée en ce qu'au moins un moyen de délimitation (12, 13), en particulier l'arête, est rectiligne, de préférence en forme de bâtonnet.

12. Cheville d'expansion selon l'une des revendications 7 à 11, caractérisée en ce qu'au moins un moyen de délimitation (12, 13), de préférence l'arête, s'étend dans un plan de section transversale perpendiculaire à l'axe de la cheville.

13. Cheville d'expansion selon l'une des revendications 7 à 12, caractérisée en ce qu'au moins un moyen de délimitation (12, 13), de préférence, l'arête est disposée dans la zone des branches d'expansion (2), en particulier dans la zone du premier tiers de la longueur des branches d'expansion (2), se trouvant dans la continuité de la cheville d'expansion (1).

14. Cheville d'expansion selon l'une des revendications 7 à 13, caractérisée en ce qu'au moins un moyen de délimitation (12, 13), en particulier l'arête franchit la fente longitudinale (3) entre les branches d'expansion (2) et relie les deux branches d'expansion entre elles.

15. Cheville d'expansion selon l'une des revendications 10 à 14, caractérisée en ce qu'au moins un moyen de délimitation, en particulier l'arête (12, 13) peut être arrachée lors de l'expansion de la cheville.
